# EUROPÄISCHE PATENTSCHRIFT

(11) **EP 0 583 506 B1**
(45) Veröffentlichungstag und Bekanntmachung des Hinweises auf die Patenterteilung: **15.01.1997**
(21) Anmeldenummer: 92119949.3
(22) Anmeldetag: 24.11.1992
(51) Int. Cl.: A47J 43/12

(54) **Vorrichtung zum Herstellen von gekühlter Schlagsahne**
Device to make cooled whipped cream
Dispositif pour fabriquer de la crème fouettée refroidie

(30) Priorität: 17.08.1992 DE 9210991 U
(43) Veröffentlichungstag der Anmeldung: 23.02.1994
(73) Patentinhaber: F. VAIHINGER GmbH & CO. KOMMANDITGESELLSCHAFT, D-63110 Rodgau (DE)
(72) Erfinder: Hofmann, Andreas, W-6277 Bad Camberg-Erbach (DE); Hofmann, Ewald, W-6277 Bad Camberg-Erbach (DE); Hornisch, Udo, W-6277 Bad Camberg-Erbach (DE)
(74) Vertreter: Schieferdecker, Lutz, Dipl.-Ing.

(56) Entgegenhaltungen:
- EP-A- 0 464 341
- EP-A- 0 483 644
- WO-A-88/01473
- DE-A- 2 538 229
- DE-A- 3 209 892
- DE-B- 1 642 030
- US-A- 4 144 293
- US-A- 4 922 725

## Beschreibung

Die Erfindung betrifft eine Vorrichtung zum Herstellen von gekühlter Schlagsahne mit den Merkmalen des Oberbegriffes des Anspruches 1.

Eine derartige Vorrichtung umfaßt ein isoliertes Gehäuse, in dem ein die flüssige Sahne enthaltender, gekühlter Behälter angeordnet ist. Sie umfaßt ferner eine die Sahne erzeugende, rohrförmige sowie gekühlte Schlageinrichtung und ein Absperrventil sowie eine Garniertülle und weitere Teile, wobei sich die Garniertülle an einem Mündstück eines am Ende der Schlageinrichtung angeordneten Ausgangsstückes befindet.

Die DE-A 3 209 892 beschreibt eine derartige Vorrichtung und weist eine Kühleinrichtung zum Kühlen der flüssigen Sahne in dem Behälter auf. Zum Kühlen der Schlageinrichtung dient ebenfalls diese Kühleinrichtung, wobei der Wärmeübergang und Wärmeabtransport mit Hilfe eines Kälteleitrohres erfolgt, das mit seinem einen Ende in flächigem Kontakt mit dem gekühlten, die Sahne enthaltenden Behälter steht. Das Kälteleitrohr ist doppelwandig und mit einer Flüssigkeit gefüllt, die unter Ausnutzung der möglichen Änderung ihres Aggregatzustandes als Speicher für niedrige Temperaturen dient. Das Kälteleitrohr ist im Bereich des mit der Garniertülle versehenen, vertikal angeordneten Mundstückes massiv und ohne besonderen Kältespeicher bzw. ohne Flüssigkeitsfüllung ausgeführt. Es ist im wesentlichen becherförmig und weist einen massiven Boden an seinem dem Mundstück zugewandten Ende auf.

Diese bekannte Vorrichtung erfüllt die an sie gestellten Anforderungen meist in zufriedenstellender Weise. Als störend wird jedoch empfunden, daß die an der Garniertülle austretende Sahne nach längeren Stillstandszeiten nicht sofort die gewünschte Konsistenz besitzt.

Dementsprechend liegt der Erfindung die Aufgabe zugrunde, hier Abhilfe zu schaffen und sicherzustellen, daß qualitativ hochwertige Sahne auch sofort nach längeren Stillstandszeiten zur Verfügung steht.

Diese Aufgabe wird erfindungsgemäß mit den Merkmalen des kennzeichnenden Teiles des Anspruches 1 dadurch gelöst, daß eine Kühleinrichtung für die Schlageinrichtung und zum Kühlen des Ausgangsstückes und des Mundestückes mit der Garniertülle vorgesehen ist.

Mit dieser Ausbildung läßt sich die am Ende der Schlageinrichtung und im Mundstück befindliche, bereits fertiggestellte Schlagsahne auf eine ausreichend tiefe Temperatur kühlen, so daß sie keine oder nur eine unmerkliche Veränderung erfährt, auch wenn die Vorrichtung über längere Zeit stillsteht bzw. mit größeren Entnahmeintervallen benutzt wird. Dabei lassen sich auch die erforderlichen Temperaturen im Bereich des Mundstückes und des Ausgangsstückes erzielen, weil die abzuführende Wärme vom Ausgangsstück über ein Mantelstück unmittelbar von der für die Schlageinrichtung vorgesehene Kühleinrichtung abgeführt wird und nicht über ein die Schlageinrichtung umgebendes, wärmeleitendes Mantelstück zur Kühleinrichtung für den die flüssige Sahne enthaltenden Behälter abgeleitet werden muß. Somit ist auch eine wirksame, das heißt gezielte und definierte Kühlung im Bereich des Ausgangsstückes und des Mundstückes bis hin zur Garniertülle möglich.

Zweckmäßige Ausgestaltungen und Weiterbildungen der Erfindung ergeben sich aus den Unteransprüchen.

Weitere Merkmale der Erfindung gehen aus Unteransprüchen im Zusammenhang mit der Zeichnung und der Beschreibung hervor.

Die Erfindung wird nachstehend anhand eines Ausführungsbeispieles, das in der Zeichnung dargestellt ist, näher beschrieben. Dabei zeigen:
- Fig.1 :: in Seitenansicht wesentliche Teile der Vorrichtung einschließlich Garniertülle;

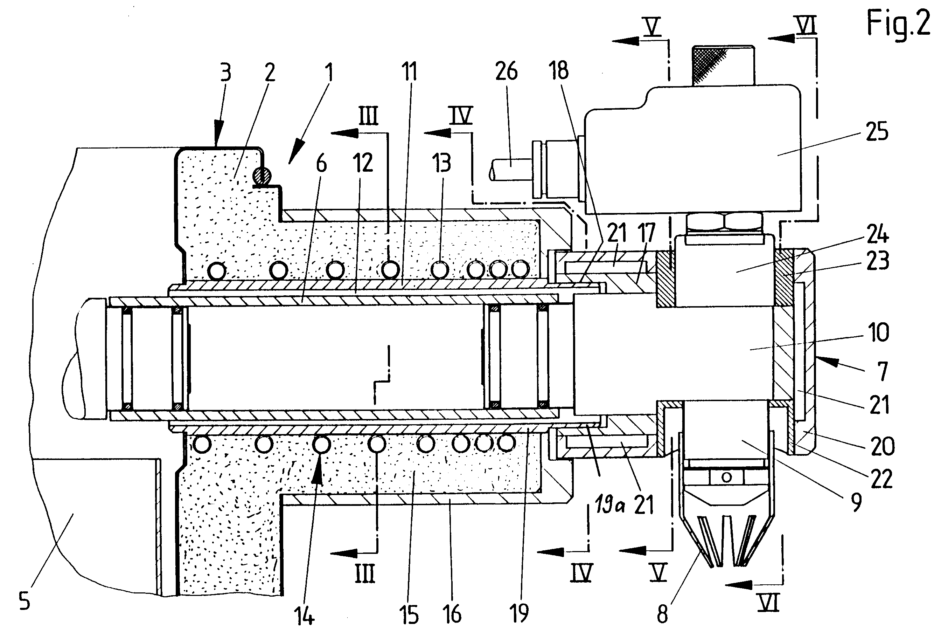

- Fig. 2:: einen Längsschnitt durch die Darstellung gemäß Fig. 1;

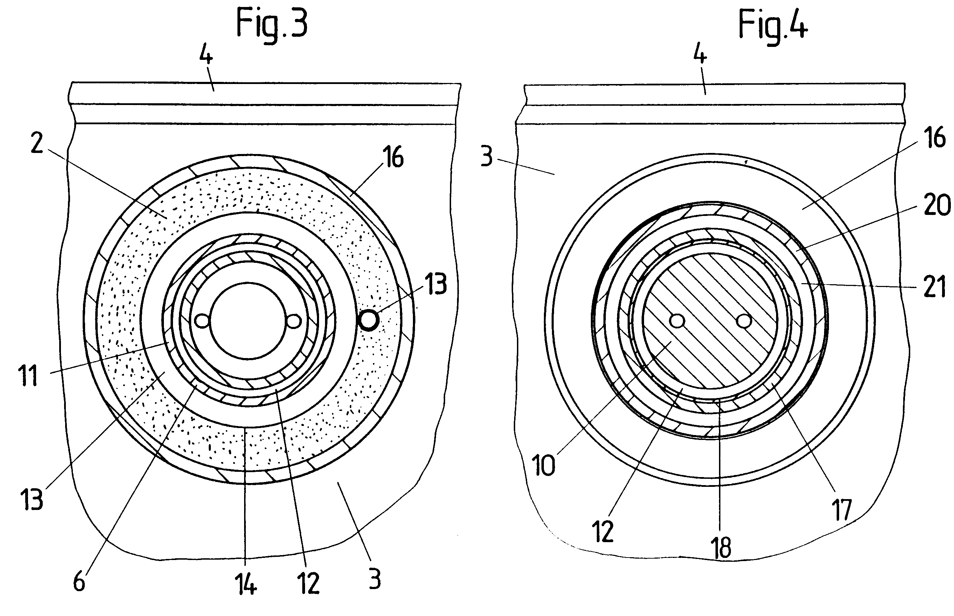

- Fig. 3:: einen Schnitt längs der Linie III-III in Fig. 2;
- Fig. 4:: einen Schnitt längs der Linie IV-IV in Fig. 2;

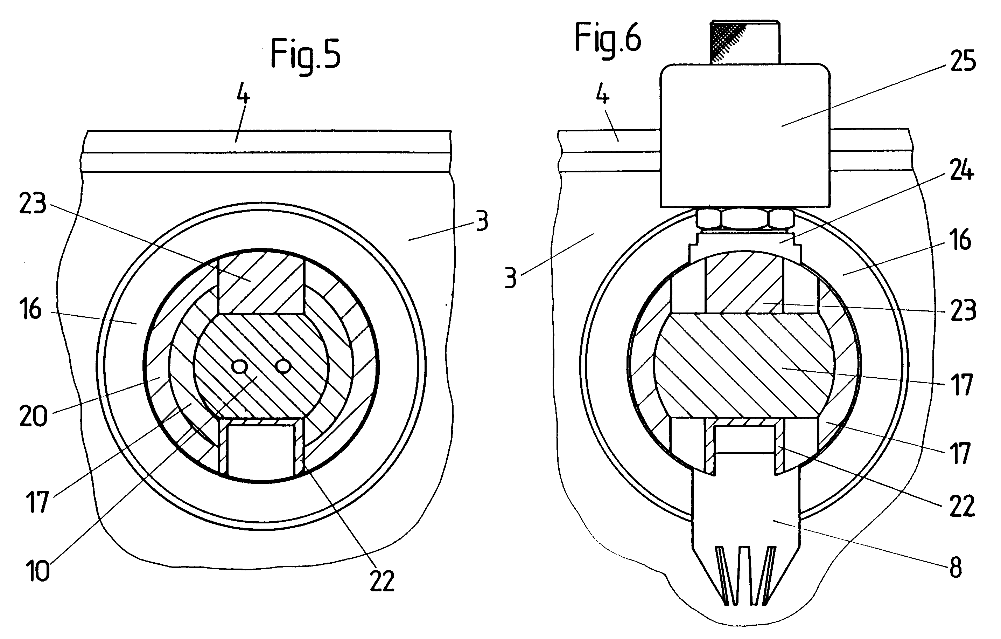

- Fig. 5:: einen Schnitt längs der Linie V-V in Fig. 2 und
- Fig. 6:: einen Schnitt längs der Linie VI-VI in Fig. 2.

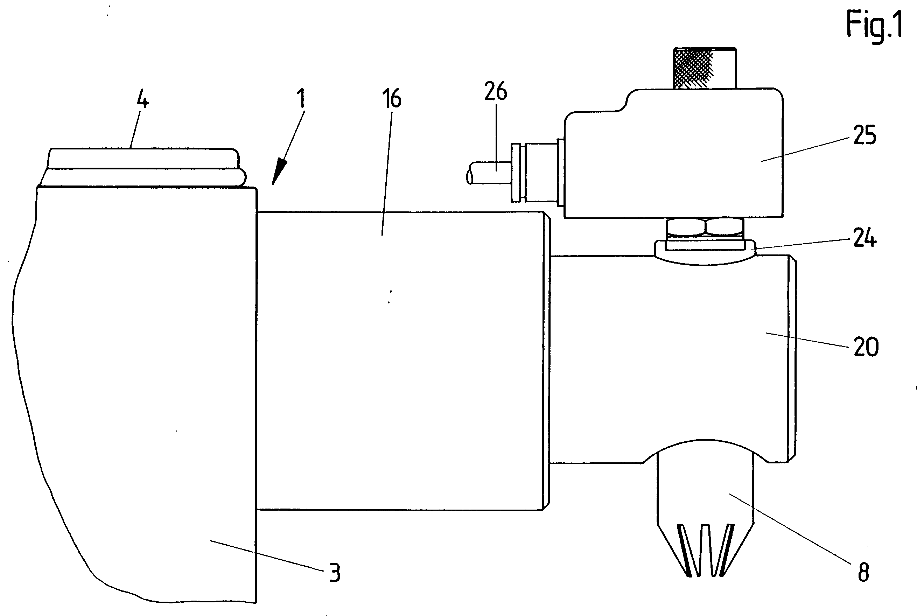

Eine Vorrichtung 1 zum Herstellen von gekühlter Schlagsahne weist ein mit einer Isolierung 2 versehenes Gehäuse 3 auf, in dem eine Kühleinrichtung 4 (Fig. 1) und ein die flüssige Sahne enthaltender Behälter 5 angeordnet sind. Ferner umfasst die Vorrichtung 1 eine die Sahne erzeugende, grundsätzlich bekannte, rohrförmige Schlageinrichtung 6, ein Absperrventil 7 und eine Garniertülle 8, wobei sich die Garniertülle 8 an einem Mundstück 9 eines am Ende der Schlageinrichtung 6 angeordneten Ausgangsstückes 1o befindet.

Ein Kälteleitrohr 11 umgibt mit einem Ringspalt 12 die rohrförmige Schlageinrichtung 6 und ist innerhalb von Kühlschlangen 13 einer Kühleinrichtung 14 angeordnet. Die Kühleinrichtung 14 ist in eine Isolierung 15 eingebettet und befindet sich im Inneren einer Außenmanschette 16, die vom Gehäuse 3 wegragt. Die rohrförmige Schlageinrichtung 6 durchgreift mit dem Ausgangsstück 1o die buchsenförmige Außenmanschette 16. Gleiches gilt für das Kälteleitrohr 11.

Ferner ist ein wärmeleitendes Mantelstück 17 vorgesehen und umgibt das Ausgangsstück 1o. Das Mantelstück 17 liegt an dem Kälteleitrohr 11 längs einer zylindrischen Ringfläche 18 an.

Das Kälteleitrohr 11 weist an seinem garniertüllenseitigen Ende 19 und somit im Bereich der Ringfläche 18, die eine wärmeleitenden Kontakt zum Mantelstück 17 herstellt, ein zylindrisches Ringstück 19a auf. Die Wandstärke dieses zylindrischen Ringstückes 19a ist geringer als die sonstige Wandstärke des Kälteleitrohres 11. Durch Beeinflussung der Wandstärke des zylindrischen Ringstückes 19a läßt sich der Wärmeübergang beeinflussen mit der Folge, daß auch nicht zu viel Wärme vom Mundstück 9 und dem Ausgangsstück 1o einschließlich der Garniertülle 8 abgezogen wird.

Eine Isolierkappe 2o aus Kunststoff umgibt schließlich noch das Mantelstück 17. Auch Luftkammern 21 sind zwischen der Isolierlierkappe 2o und dem Mantelstück 17 vorgesehen.

Eine Kunststoffbuchse 22 umgibt das Mundstück 9 im unteren Bereich mit Abstand und liegt eingebettet in der Isolierkappe 2o. Eine weitere Kunststoffbuchse 23 im oberen Bereich liegt eingebettet zwischen der Isolierkappe 2o und einem Verlängerungsstück 24 für ein nicht dargestelltes und grundsätzlich bekanntes Magnetventil. Über dem Verlängerungsstück 24 erhebt sich eine Magnetventilspule 25 mit ihrer elektrischen Anschlußleitung 26.

Die Erfindung ist nicht auf das in den Figuren dargestellte Ausführungsbeispiel beschränkt, vielmehr sind noch Abwandlungen möglich, gemäß den Unteransprüchen. Diese beinhalten die Maßnahme, daß die Kühleinrichtung 14 nicht unabhängig von der Kühleinrichtung 4 wirksam sein muß, vielmehr ist sie vorzugsweise Teil dieser Kühleinrichtung 4, auch wenn dies nicht im Detail aus den Figuren hervorgeht.

## Patentansprüche

1. Vorrichtung zum Herstellen von gekühlter Schlagsahne mit einem eine Isolierung (2) aufweisenden Gehäuse (3), in dem ein die flüssige Sahne enthaltender, gekühlter Behälter (5) angeordnet ist, sowie mit einer die Sahne erzeugenden, rohrförmigen sowie gekühlten Schlageinrichtung (6), mit einem Absperrventil (7) und einer Garniertülle (8), wobei sich die Garniertülle (8) an einem Mundstück (9) eines am Ende der Schlageinrichtung (6) angeordneten Ausgangsstückes (10) befindet, und wobei eine Kühleinrichtung (4) für den Behälter (5) mit der flüssigen Sahne vorgesehen ist, dadurch gekennzeichnet, daß eine Kühleinrichtung (14) für die Schlageinrichtung (6) und zum Kühlen des Ausgangsstückes (10) und des Mundstückes (9) mit der Garniertülle (8) vorgesehen ist.

2. Vorrichtung nach Anspruch 1, dadurch gekennzeichnet, daß ein wärmeleitendes Mantelstück (17) vorgesehen ist und das Ausgangsstück (10) umgibt und daß das Mantelstück (17) längs einer zylindrischen Ringfläche (18) an einem Kälteleitrohr (11) anliegt, das zusammen mit der für die Schlageinrichtung (6) bestimmten Kühleinrichtung (14) vorgesehen ist.

3. Vorrichtung nach einem oder mehreren der vorhergehenden Ansprüche, dadurch gekennzeichnet, daß eine Isolierkappe (20) das Mantelstück (17) umgibt.

4. Vorrichtung nach einem oder mehreren der vorhergehenden Ansprüche, dadurch gekennzeichnet, daß Luftkammern (21) zwischen Isolierkappe (20) und Mantelstück (17) vorgesehen sind.

5. Vorrichtung nach einem oder mehreren der vorhergehenden Ansprüche, dadurch gekennzeichnet, daß das Kälteleitrohr (11) an seinem garniertüllenseitigen Ende (19) ein zylindrisches Ringstück (19a) aufweist.

6. Vorrichtung nach einem oder mehreren der vorhergehenden Ansprüche, dadurch gekennzeichnet, daß das Ringstücke (19a) eine Wandstärke aufweist, die geringer ist, als die Wandstärke des Kälteleitrohres (11).

7. Vorrichtung nach einem oder mehreren der vorhergehenden Ansprüche, dadurch gekennzeichnet, daß das Mantelstück (17) an dem eine geringe Wandstärke aufweisenden zylindrischen Ringstück (19a) anliegt.

8. Vorrichtung nach einem oder mehreren der vorhergehenden Ansprüche, dadurch gekennzeichnet, daß die Schlageinrichtung (6) innerhalb von Kühlschlangen (13) der Kühleinrichtung (14) angeordnet ist.

## Claims

1. Apparatus for producing cooled whipped cream comprising a housing (3) which has an insulation (2) and in which is arranged a cooled container (5) for containing the liquid cream, and a tubular and cooled whipping device (6) for producing the cream, a shut-off valve (7) and a garnish nozzle (8), wherein the garnish nozzle (8) is disposed on a mouthpiece (9) of an outlet portion (10) arranged at the end of the whipping device (6) and wherein a cooling device (4) is provided for the container (5) with the liquid cream, characterised in that there is provided a cooling device (14) for the whipping device (6) and for cooling the outlet portion (10) and the mouthpiece (9) with the garnish nozzle (8).

2. Apparatus according to claim 1 characterised in that there is provided a heat-conducting casing portion (17) which surrounds the outlet portion (10) and that the casing portion (17) bears along a cylindrical annular surface (18) against a cold-conducting tube (11) which is provided together with the cooling device (14) intended for the whipping device (6).

3. Apparatus according to one or are of the preceding claims characterised in that an insulating cap (20) surrounds the casing portion (17).

4. Apparatus according to one or more of the preceding claims characterised in that air chambers (21) are provided between the insulating cap (20) and the casing portion (17).

5. Apparatus according to one or more of the preceding claims characterised in that the cold-conducting tube (11) has a cylindrical annular portion (19a) at its end (19) which is towards the garnish nozzle.

6. Apparatus according to one or more of the preceding claims characterised in that the annular portion (19a) is of a wall thickness which is less than the wall thickness of the cold-conducting tube (11).

7. Apparatus according to one or more of the preceding claims characterised in that the casing portion (17) bears against the cylindrical annular portion (19a) which is of small wall thickness.

8. Apparatus according to one or more of the preceding claims characterised in that the whipping device (6) is arranged within cooling coils (13) of the cooling device (14).

## Revendications

1. Dispositif pour la fabrication de crème fouettée refroidie comprenant un boîtier (3) présentant une isolation (2), dans lequel est disposé un récipient (5) contenant la crème liquide, ainsi qu'un dispositif de fouettage (6), refroidi, tubulaire et produisant la crème, une vanne d'arrêt (7) et une douille de garniture (8), la douille de garniture (8) se trouvant à un embout (9) d'une sortie (10) disposée à l'extrémité du dispositif de fouettage (6), et un dispositif de refroidissement (4) étant prévu pour le récipient (5) contenant la crème liquide, caractérisé en ce qu'un dispositif de refroidissement (14) est prévu pour le dispositif de fouettage (6) et pour le refroidissement de la sortie (10) et de l'embout (9) muni de la douille de garniture (8).

2. Dispositif selon la revendication 1, caractérisé en ce qu'une pièce d'enveloppe (17) thermoconductrice est prévue et entoure la sortie (10) et en ce que la pièce d'enveloppe (17) est appliquée le long d'une surface annulaire cylindrique (18), contre un tube conducteur de froid (11) qui est prévu ensemble avec le dispositif de refroidissement (14) destiné au dispositif de fouettage (6).

3. Dispositif selon l'une ou plusieurs des revendications précédentes, caractérisé en ce qu'un chapeau isolant (20) entoure la pièce d'enveloppe (17).

4. Dispositif selon l'une ou plusieurs des revendications précédentes, caractérisé en ce que des chambres à air (21) sont prévues entre le chapeau isolant (20) et la pièce d'enveloppe (17).

5. Dispositif selon l'une ou plusieurs des revendications précédentes, caractérisé en ce que le tube conducteur de froid (11) présente une pièce annulaire cylindrique (19a) à son extrémité (19), côté douille de garniture.

6. Dispositif selon l'une ou plusieurs des revendications précédentes, caractérisé en ce que la pièce annulaire (19a) présente une épaisseur de paroi qui est inférieure à l'épaisseur de paroi du tube conducteur de froid (11).

7. Dispositif selon l'une ou plusieurs des revendications précédentes, caractérisé en ce que la pièce d'enveloppe (17) est appliquée contre la pièce annulaire (19a) cylindrique, dont l'épaisseur de paroi est faible.

8. Dispositif selon l'une ou plusieurs des revendications précédentes, caractérisé en ce que le dispositif de fouettage (6) est disposé à l'intérieur de serpentins de refroidissement (13) du dispositif de refroidissement (14).
